# EUROPÄISCHE PATENTSCHRIFT

(11) **EP 3 802 330 B1**
(45) Veröffentlichungstag und Bekanntmachung des Hinweises auf die Patenterteilung: **06.04.2022**
(21) Anmeldenummer: 19723350.5
(22) Anmeldetag: 06.05.2019
(51) Int. Cl.: B64G 1/28, F16F 15/30, B64G 1/22, F16F 15/131, F16F 15/14

(54) **SCHWUNGRAD MIT TILGERMASSEN**
FLYWHEEL HAVING TUNED MASS DAMPERS
VOLANT D'INERTIE À MASSES D'AMORTISSEMENT

(30) Priorität: 24.05.2018 DE 102018112496
(43) Veröffentlichungstag der Anmeldung: 14.04.2021
(73) Patentinhaber: Rockwell Collins Deutschland GmbH, 69123 Heidelberg (DE)
(72) Erfinder: EHINGER, Markus, 69469 Weinheim (DE); HENNING, Dirk, 69469 Weinheim (DE)
(74) Vertreter: Müller Hoffmann & Partner
(86) Internationale Anmeldenummer: PCT/EP2019/061570
(87) Internationale Veröffentlichungsnummer: WO 2019/223990

(56) Entgegenhaltungen:
- DE-A1- 2 225 925
- DE-A1- 3 207 609
- DE-U1- 8 806 742
- US-A- 4 892 174

## Beschreibung

Die Erfindung betrifft eine Schwungradvorrichtung zur Lagestabilisierung eines Raumflugkörpers, insbesondere zur Lageregelung von Satelliten.

Derartige Schwungräder bzw. Reaktionsräder sind bekannt, um die Ausrichtung von Satelliten zu kontrollieren. Das Schwungrad wird durch einen Antrieb in Rotation versetzt, so dass durch die Kreiselwirkung ein stabilisierender Effekt erreicht werden kann. Um einen wirksamen Kreiseleffekt zu erzielen, ist es zweckmäßig, einen möglichst großen Teil der Masse des Schwungrads möglichst weit außen zu positionieren, so dass diese Masse mit möglichst großem Durchmesser um die Drehachse des Schwungrads rotieren kann.

Aus der DE 39 21 765 A1 ist eine derartige Schwungradvorrichtung bekannt, dass - ähnlich dem Rad eines Fahrrads - einen innenliegenden Stator, einen außenliegenden Rotor und eine den Rotor mittels Speichen auf dem Stator drehbar tragende Nabe aufweist. Die Nabe ist durch zwei Wälzlager auf dem Stator drehbar abgestützt, die als Fest- und Loslager gestaltet sein können.

Derartige Schwungräder sind umso effizienter, je niedriger deren Reibung im Betrieb ist. Diese Reibung wird unter anderem von der Größe der Lagereinheit und deren Vorspannung bestimmt. Die Lagerbelastung im Startfall (Start der den Satelliten transportierenden Rakete) bestimmt die Größe der Lagereinheit, da diese die Belastung beim Start (Beschleunigung, Vibrationen) ohne Schäden überstehen muss. Die mögliche Belastung der Lager hängt von der Rakete ab und von den Resonanzen des Schwungrads, da die Schwingungsanregungen zu einer Resonanzüberhöhung der Lagerbelastung führen können.

Dementsprechend kann es sinnvoll sein, Vorkehrungen zu treffen, mit denen derartige Resonanzüberhöhungen und damit verbundene hohe Lagerbelastungen vermieden werden können.

In der DE 32 07 609 A1 wird ein Schwungrad beschrieben, bei dem eine Schwungmasse in mehrere Teilmassen aufgeteilt ist, die über getrennte Speichen mit einer Nabe verbunden sind. Dadurch werden Auslenkungen in axialer Richtung begrenzt und gedämpft.

Der Erfindung liegt daher die Aufgabe zugrunde, ein Schwungrad zu Lagestabilisierung eines Raumflugkörpers anzugeben, bei dem eine Beeinflussung, insbesondere eine Reduzierung von unerwünschten Resonanzschwingungen möglich ist.

Die Aufgabe wird durch ein Schwungrad mit den Merkmalen von Anspruch 1 gelöst. Vorteilhafte Ausgestaltungen sind den abhängigen Ansprüchen zu entnehmen.

Es wird ein Schwungrad zur Lagestabilisierung eines Raumflugkörpers angegeben, mit einer Nabeneinrichtung zum Befestigen des Schwungrads, einem Schwungring, der die Nabeneinrichtung außen umlaufend mit Abstand umschließt, einer Trägereinrichtung zum Tragen des Schwungrings an der Nabeneinrichtung und mit einer Schwingungsdämpfungsvorrichtung mit einer Tilgermasseneinrichtung, die, bezogen auf eine Drehachse des Schwungrads, relativ zu dem Schwungring axial hin- und her beweglich ist.

Der Aufbau des Schwungrads, mit der Nabeneinrichtung, dem Schwungring und der Trägereinrichtung ist an sich bekannt. Die Trägereinrichtung kann insbesondere Speichen aufweisen, die sich radial zwischen der Nabeneinrichtung und dem Schwungring erstrecken.

Die Nabeneinrichtung dient dazu, das Schwungrad in geeigneter Weise zu befestigen, zum Beispiel an einer Lagereinrichtung, mit der das Schwungrad auf einem Stator drehbar gelagert wird.

Von der Nabeneinrichtung erstreckt sich die Trägereinrichtung radial nach außen, die - sinnvollerweise an ihrer radialen Außenseite - ihrerseits den Schwungring trägt. Der Schwungring bündelt die eigentliche Masse, die zur Lagestabilisierung in Rotation versetzt wird, um auf diese Weise die gewünschte Kreiselwirkung zu erzielen.

Die sich an die Nabeneinrichtung anschließende Lagereinrichtung bzw. der die Lagereinrichtung tragende Stator sind nicht Teil des Schwungrads.

Die Nabeneinrichtung, die Trägereinrichtung und der Schwungring sollten steif miteinander verbunden sein. Insbesondere kann es zweckmäßig sein, die Nabeneinrichtung, die Trägereinrichtung und den Schwungring einstückig herzustellen, zum Beispiel als bearbeitetes Gussteil. Ebenfalls ist es möglich die Nabeneinrichtung, die Trägereinrichtung und den Schwungring aus einem Metallblock spanend herauszuarbeiten. Als Material eignet sich Stahl, insbesondere Edelstahl, aber auch Aluminium. Der Außendurchmesser kann in einem Bereich zwischen 80 mm bis 400 mm liegen, wobei auch größere oder kleinere Abmessungen möglich sind.

Die Schwingungsdämpfungsvorrichtung weist die Tilgermasseneinrichtung auf, die in Axialrichtung relativ zum Schwungring hin- und her, also oszillierend beweglich ist. Die axiale Beweglichkeit der Tilgermasseneinrichtung sollte wenigstens in einem geringen Maße, also mit einer geringen Amplitude möglich sein. Hier hat sich herausgestellt, dass eine Amplitude von weniger als 5 mm, vorzugsweise sogar weniger als 1 mm, zum Beispiel in einem Bereich von 0,2 - 0,3 mm bereits ausreichend sein kann.

Insbesondere beim Start einer Rakete kann das Schwungrad, vor allem der außenliegende Schwungring durch entsprechende Schwingungseinwirkung in eine gefährliche Resonanzschwingung gebracht werden, die zu einer überhöhten Lagerbelastung führen kann, die schließlich sogar eine Zerstörung der das Schwungrad tragenden Lagereinrichtung führen kann. Durch entsprechende Abstimmung der Tilgermasseneinrichtung ist es möglich, dass die zu dem Schwungring axial hin- und her bewegliche Tilgermasseneinrichtung eine Gegenschwingung aufbaut, um auf diese Weise die starke Schwingung des Schwungrings bzw. der damit verbundenen weiteren Komponenten (insbesondere der Trägereinrichtung) zu verringern, also zu "tilgen". Auf diese Weise kann eine hochwirksame Schwingungsdämpfung erreicht werden.

Die Tilgermasseneinrichtung ist durch eine Befestigungseinrichtung an dem Schwungring und/ oder an der Trägereinrichtung befestigt, wobei die Befestigungseinrichtung derart ausgebildet ist, dass sie die axiale Beweglichkeit der Tilgermasseneinrichtung ermöglicht.

Die Befestigungseinrichtung ist somit Teil der Schwingungsdämpfungsvorrichtung und stellt die gewünschte oszillierende axiale Beweglichkeit der Tilgermasseneinrichtung bereit.

Optional ist es zusätzlich möglich, dass die Befestigungseinrichtung auch einen radialen Freiheitsgrad für die Tilgermasseneinrichtung ermöglicht. Die Bewegungen in radialer Richtung können allerdings im Verhältnis zur axialen Bewegung deutlich kleiner sein.

Die Befestigungseinrichtung kann wenigstens in einem Bereich eine elastische Verformbarkeit aufweisen, wobei die axiale Beweglichkeit der Tilgermasseneinrichtung durch die elastische Verformbarkeit der Befestigungseinrichtung erreichbar sein kann. Das bedeutet, dass die Befestigungseinrichtung Bereiche unterschiedlicher Steifigkeit bzw. elastischer Verformbarkeit aufweisen kann. Die elastische Verformbarkeit (niedrigere Steifigkeit) sollte größer sein als die Verformbarkeit der anderen Komponenten des Schwungrades, insbesondere des Schwungrings oder der Trägereinrichtung (zum Beispiel der Speichen). Die Bereiche der Befestigungseinrichtung mit steifer Ausgestaltung dienen der eigentlichen Befestigung der Tilgermasseneinrichtung, während die Bereiche der erhöhten elastischen Verformbarkeit dazu dienen, die Relativbewegung der Tilgermasseneinrichtung zuzulassen.

Die Tilgermasseneinrichtung weist mehrere Tilgermassenelemente auf, die mit Abstand am Umfang verteilt von der Befestigungseinrichtung gehalten sind. Die einzelnen Tilgermassenelemente können zum Beispiel in Form von zylindrischen, tonnenförmigen oder quaderförmigen Stahlelementen ausgebildet sein und eine Masse in einem Bereich von z.B. 20 g - 150 g, insbesondere in einem Bereich von 40 g - 100 g, z.B. ca. 60 g aufweisen.

Die Tilgermassenelemente sind in geeigneter Weise von der Befestigungseinrichtung zu halten. Dabei ist es anzustreben, dass die Tilgermassenelemente durch die Befestigungseinrichtung elastisch gehalten werden, um die Beweglichkeit bzw. ein Aufschwingen zu ermöglichen.

Insbesondere sollen die Tilgermassenelemente dabei in axialer Richtung relativ zu dem Schwungring (oszillierend) beweglich sein. Darüber hinaus kann es zweckmäßig sein, wenn die Befestigungseinrichtung auch eine radiale Beweglichkeit (radialer Freiheitsgrad) der Tilgermassenelemente ermöglicht, wobei allerdings die Bewegungen in radialer Richtung deutlich kleiner sind als die Bewegungen in axialer Richtung.

Die Befestigungseinrichtung kann bei einer Ausführungsform zwei Dämpfungsringe aufweisen, die axial zueinander angeordnet sind, derart, dass die Trägereinrichtung wenigstens teilweise dazwischen angeordnet ist. Dabei können die Dämpfungsringe miteinander befestigt sein, derart, dass die Trägereinrichtung in Axialrichtung gesehen zwischen den beiden Dämpfungsringen angeordnet ist.

Die beiden Dämpfungsringe sind somit an der Trägereinrichtung befestigt und können die Trägereinrichtung zum Beispiel zwischen sich einklemmen. Die Dämpfungsringe dienen dann ihrerseits als Befestigungseinrichtung, um die Tilgermasseneinrichtung zu tragen.

Die Trägereinrichtung kann zum Beispiel durch mehrere sich radial zwischen der Nabeneinrichtung und dem Schwungring erstreckende Speichen gebildet sein. Die beiden Dämpfungsringe schließen dann jeweils einen Bereich der Speichen zwischen sich ein.

Die Anzahl der Speichen sollte ungerade sein und vorzugsweise einer Primzahl entsprechen. Dadurch bilden sich im Resonanzverhalten keine stehenden Wellen sowie weitere unerwünschte Eigen-Bewegungen aus.

Die Tilgermassenelemente können zwischen den Dämpfungsringen gehalten und entlang der Umfangsrichtung der Dämpfungsringe verteilt angeordnet sein.

Dabei können die Dämpfungsringe entlang ihrem Umfang Bereiche höherer Elastizität (niedrigerer Steifigkeit) und niedrigerer Elastizität (höherer Steifigkeit) aufweisen, wobei die Tilgermassen in den Bereichen mit höherer Elastizität befestigt sind. Die Bereiche höherer Elastizität lassen somit eine Bewegung der einzelnen Tilgermassenelemente in der gewünschten Weise zu, so dass die Tilgermassenelemente relativ zu dem Schwungring bzw. dem restlichen Schwungrad axial schwingen können.

Die Bereiche höherer und niedrigerer Elastizität können dadurch erreicht werden, dass die Dämpfungsringe stellenweise dünner ausgeführt werden oder stellenweise zusätzliche Versteifungen (zum Erreichen höherer Steifigkeit) aufweisen.

Die Trägereinrichtung kann am Umfang verteilt mehrere Speichen aufweisen, die sich radial zwischen der Nabeneinrichtung und dem Schwungring erstrecken. Dabei können die Tilgermassenelemente in entsprechenden Zwischenräumen zwischen den Speichen angeordnet sein und durch die Dämpfungsringe gehalten werden. Insbesondere können die Tilgermassenelemente in Umfangsrichtung mittig zwischen den Speichen gehalten werden. Dementsprechend kann die Anzahl der Tilgermassenelemente gleich der Anzahl der Speichen sein.

Zum Erreichen der gewünschten Schwingungsdämpfungswirkung ist es sinnvoll, wenn eine Hauptresonanz der Tilgermasseneinrichtung derart einstellbar ist, dass sie im Wesentlichen der Hauptresonanz des Schwungrings bzw. des gesamten Schwungrads entspricht, wobei die Hauptresonanz der Tilgermasseneinrichtung durch Abstimmen des Gewichts der Tilgermassenelemente und der elastischen Verformbarkeit der Befestigungseinrichtung einstellbar ist.

Es kann eine Zentriereinrichtung vorgesehen sein, zum Zentrieren der Schwingungsdämpfungsvorrichtung relativ zu dem Schwungring. Die Zentriereinrichtung kann zum Beispiel geeignete Zentrierrollen aufweisen, die am Innendurchmesser des Schwungrings anliegen und zur konzentrischen Platzierung der Schwingungsdämpfungsvorrichtung und damit der Verminderung der Unwucht dienen.

Bei einer Variante mit einer optionalen Ergänzung, die eine weitere Schwingungsdämpfungswirkung erreichen kann, können die Dämpfungsringe derart miteinander befestigt sein, dass eine Relativbewegung zwischen den Dämpfungsringen einerseits und der Trägereinrichtung andererseits ermöglicht wird. Es kann also möglich sein, die Dämpfungsringe miteinander zu befestigen, zum Beispiel zu verschrauben und dabei die Trägereinrichtung (zum Beispiel die Speichen) zwischen den Dämpfungsringen einzuklemmen. Bei Einhalten einer bestimmten, vorgegebenen Vorspannkraft zwischen den beiden Dämpfungsringen kann eine gezielte Reibbewegung zwischen den Dämpfungsringen und der Trägereinrichtung ermöglicht werden.

Bei einer Variante kann in dem Bereich einer jeweiligen Kontaktfläche der Dämpfungsringe mit der Trägereinrichtung wenigstens teilweise eine Reibunterlage zwischen dem jeweiligen Dämpfungsring und dem entsprechenden Bereich der Trägervorrichtung vorgesehen sein.

Wenn die Dämpfungsringe derart an der Trägereinrichtung befestigt sind, dass eine Relativbewegung zwischen den Dämpfungsringen und der Trägereinrichtung möglich ist, kann diese gewollte Beweglichkeit durch das Einlegen der Reibunterlagen unterstützt werden. Die Reibunterlagen lassen eine definierte Reibung zwischen den Dämpfungsringen und der Trägereinrichtung zu.

Zum Beispiel können die Reibunterlagen an den äußeren Enden der als Trägereinrichtung dienenden Speichen aufgelegt und durch die Dämpfungsringe festgeklemmt sein. Bei niedrigen Schwingungsanregungen sorgen die Klemmkräfte dafür, dass die Dämpfungsringe fest an die Bewegung der Schwungmasse, also insbesondere des Schwungrings gekoppelt sind und sich alle Bewegungen auf die Dämpfungsringe übertragen. Dies betrifft insbesondere Schwingungsbewegungen mit Amplituden in Axialrichtung des Schwungrads.

Wird eine der Hauptmoden der Schwungmasse angeregt, so schwingt sich der Schwungring gegenüber der Nabeneinrichtung auf. Diese Eigenmoden sind der kritische Fall, deren Amplitude im Resonanzfall so klein wie möglich gehalten werden muss. Sobald die Schwingungsamplitude so groß wird, dass an den Kontaktflächen der Dämpfungsringe die Haftreibung überschritten wird, beginnen diese relativ zu den Reibunterlagen zu rutschen. Dadurch entstehen zwei Systeme mit unterschiedlichen Resonanzfrequenzen, die sich relativ zueinander bewegen.

Die neu eingebrachte Bewegungsenergie wird in Form von Reibungswärme dissipiert.

Die Frequenz der Hauptresonanz der Schwingungsdämpfungsvorrichtung sollte so genau wie möglich auf der Hauptresonanz der gesamten Schwungmasse liegen. Die Abstimmung findet zum einen über das Gewicht der Tilgermassenelemente statt (insbesondere durch Anpassung der Größe) und über die die Steifigkeit der Anbindung der Tilgermassenelemente (zum Beispiel durch Anpassung der Querschnitte der Dämpfungsringe). Pro Schwungmassentyp hat diese Abstimmung einmal zu erfolgen. Wird eine neue Schwungmasse bzw. ein neuer Schwungmassentyp entworfen, so müssen einmalig per FEM-Simulation die Größe und das Gewicht der Tilgermassen ausgelegt werden. Durch die Resonanz der Befestigungseinrichtung (zum Beispiel der Dämpfungsringe) mit den Tilgermassenelementen entsteht eine verstärkte Relativbewegung und dadurch eine Energiedissipation, die eine verstärkte Dämpfung bewirkt.

Die Schwingungsdämpfungswirkung kann einerseits durch die Tilgermasseneinrichtung bewirkt werden. Zusätzlich ist es optional auch möglich, durch gezielte Reibung in den Kontaktflächen zwischen den Dämpfungsringen und der Trägereinrichtung (zum Beispiel den Speichen) eine zusätzliche Schwingungsdämpfung zu bewirken.

Die Tilgermassenelemente und die sie tragenden Dämpfungsringe sind so abgestimmt, dass die Tilgermassenelemente im oben erwähnten Resonanzfall entgegen dem sich in axialer Richtung aufschwingenden Schwungring schwingen und somit die Schwingung heruntertilgen bzw. dämpfen. Es erfolgt im Prinzip eine Energieverlagerung vom sich aufschwingenden Schwungring zur aufschwingenden Tilgermasse, die quasi "dagegen hält".

Derart aufgebaute Schwungräder können ein Gewicht in einem Bereich von z.B. 100 g bis ca. 20 kg aufweisen. Mit entsprechend ausgestatteten Schwungrädern kann ein Drall von z.B. bis zu 100 Nms oder gar bis 150 Nms erreicht werden.

Diese und weitere Vorteile und Merkmale werden nachfolgend anhand von Beispielen unter Zuhilfenahme der begleitenden Figuren näher erläutert. Es zeigen:
- **Fig. 1**: in Perspektivansicht ein Schwungrad;
- **Fig. 2**: das Schwungrad von Fig. 1 in Schnittdarstellung;
- **Fig. 3**: eine Draufsicht auf das Schwungrad von Fig. 1;
- **Fig. 4**: eine Schnittdarstellung entlang der Linie B-B in Fig. 3;
- **Fig. 5**: eine weitere Schnittdarstellung;
- **Fig. 6**: eine Schnittdarstellung zum Erläutern der Reibunterlagen;
- **Fig. 7**: eine Schnittdarstellung mit einem Tilgermassenelement.

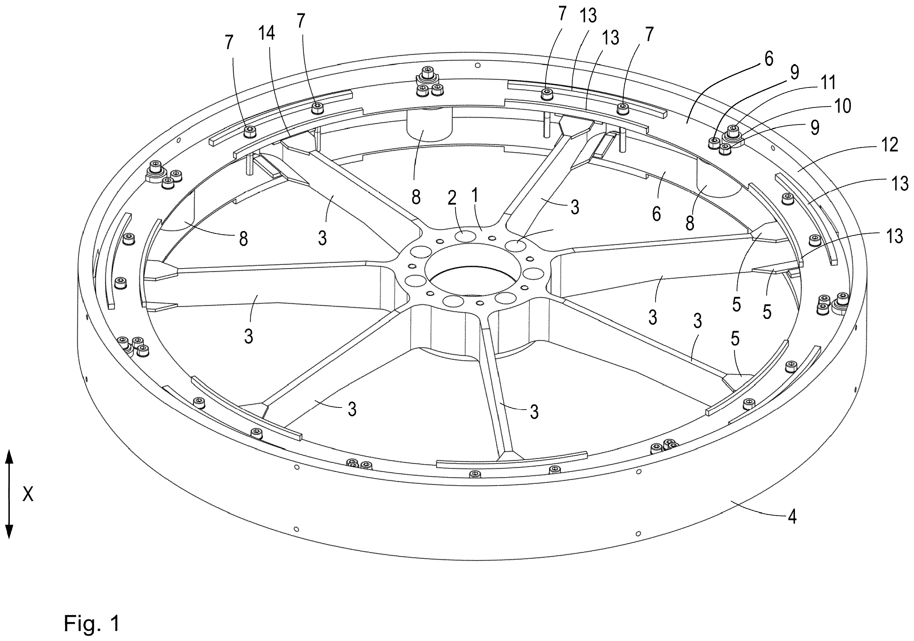

Die Fig. 1 bis 4 zeigen ein Schwungrad in jeweils unterschiedlichen Darstellungen.

Das Schwungrad weist eine Nabe 1 mit mehreren Bohrungen 2 auf, über die Nabe 1 an einer nicht dargestellten Lagereinrichtung befestigt werden kann. Über die nicht dargestellte Lagereinrichtung wird das Schwungrad drehbar gehalten bzw. in Rotation versetzt, um den gewünschten Kreiseleffekt zu erzielen.

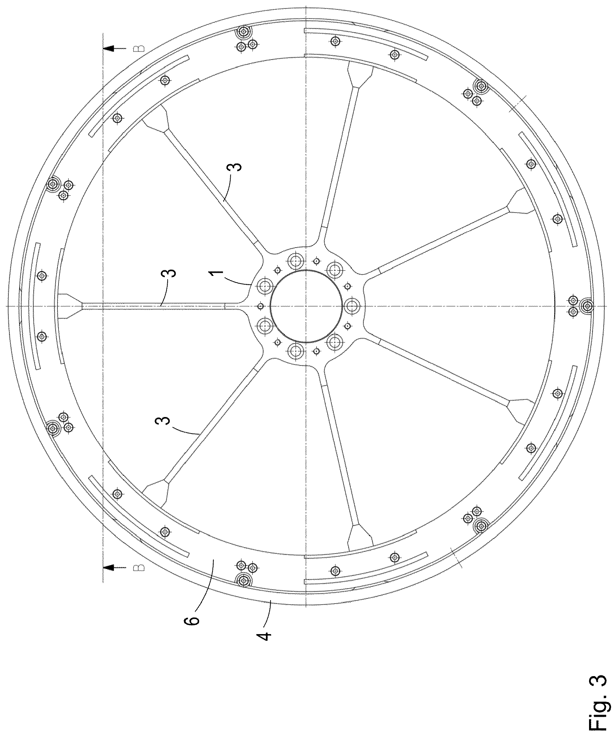

Von der Nabe 1 aus erstrecken sich mehrere, als Trägereinrichtung dienende Speichen 3 radial nach außen. Bei der in Fig. 1 gezeigten Ausführungsform sind insgesamt sieben Speichen 3 vorgesehen. Generell ist es empfehlenswert, wenn die Anzahl der Speichen ungerade ist, vorzugsweise sogar einer Primzahl entspricht. Die Speichen 3 sind aus Gewichtsgründen relativ dünn gehalten, wie Fig. 3 zeigt.

An ihren Enden tragen die Speichen gemeinsam einen umlaufenden Schwungring 4 in an sich bekannter Weise. Zur Stabilisierung und zur präzisen Halterung können an den Speichen-Enden entsprechende Stützelemente 5 vorgesehen sein.

Der bisher beschriebene Aufbau entspricht einem üblichen Schwungrad, wie es aus dem Stand der Technik bekannt ist.

Erfindungsgemäß sind zwei umlaufende Dämpfungsringe 6 vorgesehen, die axial zueinander angeordnet sind und die Speichen 3, genauer gesagt die äußeren Enden der Speichen 3 zwischen sich einschließen. Die Dämpfungsringe 6 sind mit Hilfe von Schrauben 7 miteinander verschraubt.

Über das Einstellen der Schrauben 7 kann die Klemmkraft zwischen den Dämpfungsringen 6 und den Speichen 3, insbesondere den Stützelementen 5 der Speichen 3 justiert werden.

Mittig zwischen jeweiligen Enden der Speichen 3 sind Tilgermassenelemente 8 zwischen den Dämpfungsringen 6 angeordnet und durch Schrauben 9 an den Dämpfungsringen 6 befestigt. Die Tilgermassenelemente 8 bilden im Zusammenwirken mit den Dämpfungsringen 6 eine Schwingungsdämpfungsvorrichtung. Die Tilgermassenelemente 8 sind als zylindrische Strahlkörper ausgebildet und werden durch die mehrfache Verschraubung durch die Schrauben 9 fest an den Dämpfungsringen 6 gehalten.

Unmittelbar in der Nähe der Tilgermassenelemente 8 sind darüber hinaus als Zentriereinrichtung dienende Zentrierrollen 10 vorgesehen, die durch Schrauben 11 auf den jeweiligen Dämpfungsringen 6 oben wie unten befestigt sind. Die Zentrierrollen 10 laufen an einem Innenumfang 12 des Schwungrings 4 und dienen der Zentrierung der beiden Dämpfungsringe 6 und der von diesen getragenen Tilgermassenelementen 8. Dabei ist zu beachten, dass die Tilgermassenelemente 8 ein erhebliches Gewicht mit sich bringen, das bei Rotation des Schwungrads entsprechende Zentrifugalkräfte bewirken kann. Durch die jeweiligen Zentrierrollen 10 lässt sich die Schwingungsdämpfungsvorrichtung, bestehend aus den Dämpfungsringen 6 und den Tilgermassenelementen 8, zuverlässig zentrieren und stabilisieren.

Die Dämpfungsringe 6 sind im Verhältnis zu den anderen Bauelementen sehr dünn ausgeführt und weisen damit eine höhere elastische Verformbarkeit bzw. niedrigere Steifigkeit auf. In den Bereichen, an denen die Dämpfungsringe 6 die Enden der Speichen 3 kontaktieren, sind jeweilige Verstärkungselemente 13 auf den Dämpfungsringen 6 außen aufgebracht. Die Verstärkungselemente 13 können einstückig mit dem jeweiligen Dämpfungsring 6 ausgebildet sein. Sie können aber auch zusätzlich auf dem Dämpfungsring 6 angebracht sein, zum Beispiel durch ein Klebe- oder Schweißverfahren.

Die Verstärkungselemente 13 dienen zur Versteifung der Dämpfungsringe 6 in den entsprechenden Bereichen.

Dementsprechend weisen die Dämpfungsringe 6 am Umfang Bereiche mit erhöhter Steifigkeit bzw. geringerer elastischer Verformbarkeit auf (Bereiche an den Enden der Speichen 3 bzw. an den Verschraubungsstellen der Schrauben 7) sowie Bereiche erhöhter elastischer Verformbarkeit (niedrigerer Steifigkeit) in den Bereichen, an denen die Tilgermassenelemente 8 befestigt sind.

Beim Start einer Rakete wird der Schwungring 4 durch die einwirkenden Vibrationen angeregt, in Axialrichtung (Richtung X) axial hin- und her zu schwingen.

Aufgrund der geringen Steifigkeit der Dämpfungsringe 6 bzw. deren erhöhter elastischer Verformbarkeit sind die Tilgermassenelemente 8 nun ihrerseits in der Lage, in Gegenrichtung axial hin- und her zu schwingen, so dass auf diese Weise eine Schwingungsbewegung erzeugt wird, die der Schwingungsbewegung des Schwungrings 4 entgegen wirkt. Durch Überlagerung der Schwingungsbewegungen wird insgesamt die Resonanzüberhöhung deutlich verringert bzw. kann weitgehend ausgeschlossen werden. Dadurch lassen sich die schädlichen Einwirkungen eines in Resonanz geratenen Schwungrads insbesondere auf die Lagereinrichtung erheblich verringern.

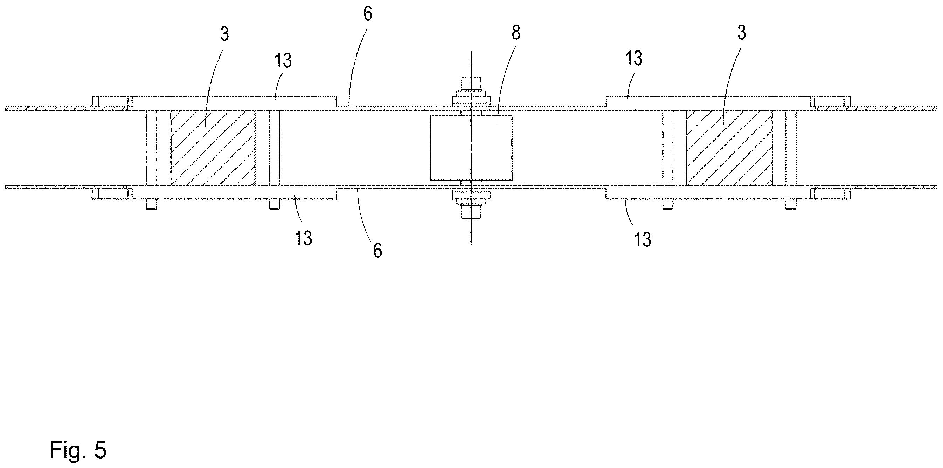

Fig. 5 zeigt den bisher beschriebenen Aufbau in einer weiteren Teilschnittdarstellung, wobei der Schnitt in Umfangsrichtung entlang der Dämpfungsringe 6 verläuft. Geschnitten sind dabei lediglich die beiden Speichen 3, während die anderen Elemente ungeschnitten dargestellt sind.

Durch diese Darstellung ist gut erkennbar, dass die Dämpfungsringe 6 in den Bereichen der Befestigung an den Speichen 3 verstärkt und damit steifer ausgeführt sind, als in den Bereichen, in denen die Tilgermassenelemente 8 befestigt sind.

Bei der bisher beschriebenen Ausführungsform sind die Dämpfungsringe 6 fest mit den sie tragenden Speichen 3 verbunden, derart, dass sie schwimmend auf den Speichen 3 gelagert sind. Da die Dämpfungsringe 6 untereinander durch die Schrauben 7 verbunden sind, werden sie an die Speichen 3 angedrückt und gegen die Speichen 3 verspannt. Dadurch kann sich bei einer axialen Resonanz des Schwungrings 4 eine Relativbewegung zwischen den Dämpfungsringen 6 und den Speichen-Auflageflächen ergeben.

Bei einer Variante mit einer optional realisierbaren, ergänzenden Schwingungsdämpfung ist es möglich, in den Kontaktflächen, an denen die Dämpfungsringe 6 auf den Speichen 3 aufliegen, gezielt geringe Relativbewegungen und damit Reibung zuzulassen, um weitere Schwingungsdämpfungseffekte zu erzielen.

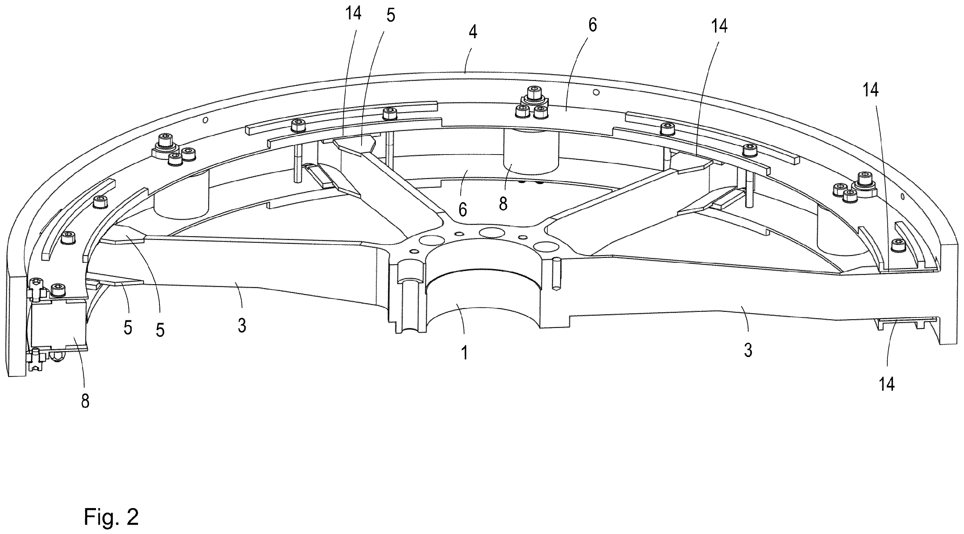

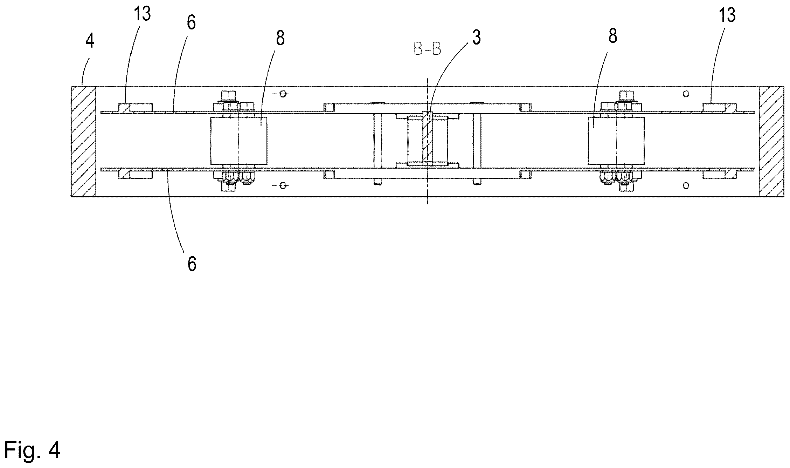

Zu diesem Zweck sind an den Kontaktflächen entsprechende Reibunterlagen 14 eingelegt, die insbesondere in den Fig. 2 und 4 erkennbar sind. Bei der Version von Fig. 5 sind keine Reibunterlagen 14 vorhanden.

Die Reibunterlagen 14 können somit optional zusätzlich zu der Tilgermasseneinrichtung vorgesehen sein.

Die Reibunterlagen 14 können einen U-förmigen Querschnitt aufweisen, wie in den Fig. 2 und 4 erkennbar, und so die Stützelemente 5, die an den Ausläufern der Speichen 3 vorgesehen sind, seitlich umschließen. Dadurch ist sichergestellt, dass die Reibunterlagen 14 ortsfest an den Enden der Speichen 3 gehalten sind.

Bei niedrigen Schwingungsanregungen sorgen die zwischen den Dämpfungsringen 6 und den in den Kontaktflächen vorhandenen Reibunterlagen 14 wirkenden Klemmkräfte dafür, dass die Dämpfungsringe 6 fest an die Bewegung der Schwungmasse, insbesondere des Schwungrings 4 angekoppelt sind und sich alle Bewegungen auf den Schwungring 4 übertragen. Zwischen den Reibunterlagen 14 und den Dämpfungsringen 6 besteht dann Haftreibung.

Wenn eine der Hauptmoden der Schwungmasse angeregt ist, schwingt sich der Schwungring 4 gegenüber der Nabe 1 auf. Diese Eigenmoden sind der kritische Fall, deren Amplitude im Resonanzfall so klein wie möglich gehalten werden muss. Sobald die Schwingungsamplitude so groß wird, dass in den Kontaktflächen zu den Dämpfungsringen 6 die Haftreibung überschritten wird, können die Dämpfungsringe 6 relativ zu den Speichen 3 bzw. dem Schwungring 4 bzw. den Reibunterlagen 14 rutschen. Dadurch entstehen zwei Systeme mit unterschiedlichen Resonanzfrequenzen, die sich relativ zueinander bewegen.

Die Relativbewegung kann dabei sehr gering sein und zum Beispiel kleiner als 1 mm sein. So hat sich herausgestellt, dass bereits eine Relativbewegung zwischen 0,2-0,3 mm (Schwingungsamplitude) ausreicht, um eine wirksame Schwingungsdämpfung mit Hilfe der Reibunterlagen 14 zu erreichen.

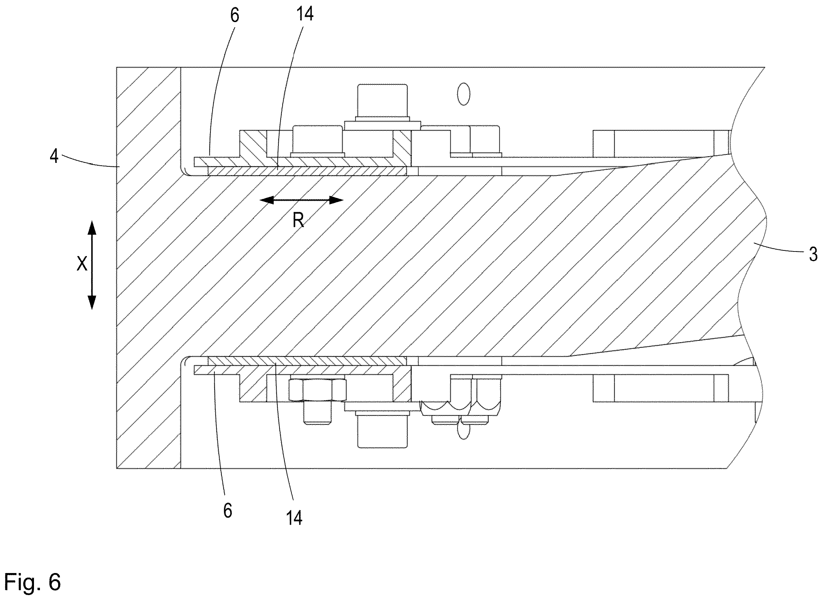

Fig. 6 zeigt die Wirkungsweise in einer vergrößerten Detailschnittdarstellung.

Dabei ist der radialseitige Ausläufer der im Schnitt abgebildeten Speiche 3 einstückig mit dem Schwungring 4 verbunden. Zwischen den Dämpfungsringen 6 ist jeweils eine Reibunterlage 14 eingelegt.

Wenn der Schwungring 4 im Resonanzfall bzw. bei entsprechender Schwingungsanregung in Axialrichtung X schwingt, ergibt sich nach Überwindung der Haftreibung zwischen den Dämpfungsringen 6 und den Reibunterlagen 14 eine Relativbewegung in Radialrichtung R.

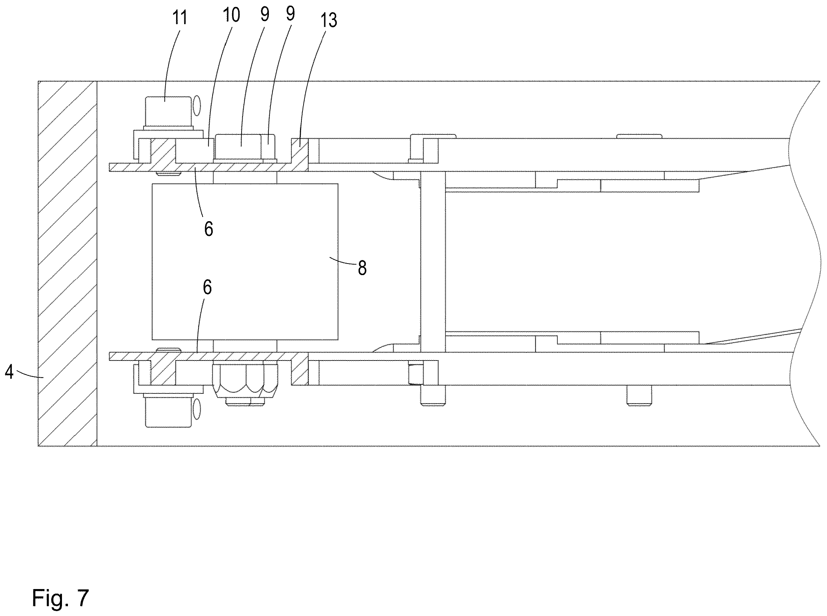

Fig. 7 zeigt ergänzend eine vergrößerte Detaildarstellung mit einem Tilgermassenelement 8, das zwischen den beiden Dämpfungsringen 6 gehalten ist.

## Patentansprüche

1. Schwungrad zur Lagestabilisierung eines Raumflugkörpers, mit
- einer Nabeneinrichtung (1) zum Befestigen des Schwungrads;
- einem Schwungring (4), der die Nabeneinrichtung (1) außen umlaufend mit Abstand umschließt;
- einer Trägereinrichtung (3) zum Tragen des Schwungrings (4) an der Nabeneinrichtung (1); und mit
- einer Schwingungsdämpfungsvorrichtung (6, 8) mit einer Tilgermasseneinrichtung (8), die, bezogen auf eine Drehachse des Schwungrads, relativ zu dem Schwungring (4) axial hin- und her beweglich ist;
**dadurch gekennzeichnet, dass**
- die Tilgermasseneinrichtung (8) durch eine Befestigungseinrichtung (6) an dem Schwungring (4) und/oder an der Trägereinrichtung (3) befestigt ist;
- die Befestigungseinrichtung (6) derart ausgebildet ist, dass sie die axiale Beweglichkeit der Tilgermasseneinrichtung (8) ermöglicht; und dass
- die Tilgermasseneinrichtung mehrere Tilgermassenelemente (8) aufweist, die mit Abstand am Umfang verteilt von der Befestigungseinrichtung (6) gehalten sind.

2. Schwungrad nach Anspruch 1, wobei
- die Befestigungseinrichtung (6) wenigstens in einem Bereich eine elastische Verformbarkeit aufweist; und wobei
- die axiale Beweglichkeit der Tilgermasseneinrichtung (8) durch die elastische Verformbarkeit der Befestigungseinrichtung (6) erreichbar ist.

3. Schwungrad nach einem der vorstehenden Ansprüche, wobei
- die Befestigungseinrichtung zwei Dämpfungsringe (6) aufweist, die axial zueinander angeordnet sind, derart, dass die Trägereinrichtung (3) wenigstens teilweise dazwischen angeordnet ist; und wobei
- die Dämpfungsringe (6) miteinander befestigt sind, derart, dass die Trägereinrichtung (3) in Axialrichtung gesehen zwischen den beiden Dämpfungsringen (6) angeordnet ist.

4. Schwungrad nach Anspruch 3, wobei
- die Tilgermassenelemente (8) zwischen den Dämpfungsringen (6) gehalten sind und entlang der Umfangsrichtung der Dämpfungsringe (6) verteilt angeordnet sind; und wobei
- die Dämpfungsringe (6) entlang ihrem Umfang Bereiche höherer Elastizität und niedriger Elastizität aufweisen, wobei die Tilgermassenelemente (8) in den Bereichen mit höherer Elastizität befestigt sind.

5. Schwungrad nach einem der vorstehenden Ansprüche, wobei die Trägereinrichtung am Umfang verteilt mehrere Speichen (3) aufweist, die sich radial zwischen der Nabeneinrichtung (1) und dem Schwungring (4) erstrecken.

6. Schwungrad nach Anspruch 3 oder nach Anspruch 3 und einem der vorstehenden Ansprüche, wobei die Tilgermassenelemente (8) in Zwischenräumen zwischen den Speichen (3) angeordnet sind und durch die Dämpfungsringe (6) gehalten werden.

7. Schwungrad nach einem der vorstehenden Ansprüche, wobei
- eine Hauptresonanz der Tilgermasseneinrichtung (8) derart einstellbar ist, dass sie im Wesentlichen der Hauptresonanz des Schwungrings (4) oder des Schwungrads entspricht; und wobei
- die Hauptresonanz der Tilgermasseneinrichtung (8) durch Abstimmen des Gewichts der Tilgermassenelemente und der elastischen Verformbarkeit der Befestigungseinrichtung (6) einstellbar ist.

8. Schwungrad nach einem der vorstehenden Ansprüche, wobei eine Zentriereinrichtung (10) vorgesehen ist, zum Zentrieren der Schwingungsdämpfungsvorrichtung (6, 8) relativ zu dem Schwungring (4).

9. Schwungrad nach Anspruch 3 oder nach Anspruch 3 und einem der vorstehenden Ansprüche, wobei die Dämpfungsringe (6) derart miteinander befestigt sind, dass eine Relativbewegung zwischen den Dämpfungsringen (6) einerseits und der Trägereinrichtung (3) andererseits ermöglicht wird.

10. Schwungrad nach Anspruch 3 oder nach Anspruch 3 und einem der vorstehenden Ansprüche, wobei in dem Bereich einer jeweiligen Kontaktfläche der Dämpfungsringe (6) mit der Trägereinrichtung (3) wenigstens teilweise eine Reibunterlage (14) zwischen dem jeweiligen Dämpfungsring (6) und dem entsprechenden Bereich der Trägervorrichtung (3) vorgesehen ist.

## Claims

1. A flywheel for stabilizing the position of a spacecraft, with
- a hub means (1) for fastening the flywheel;
- a flywheel ring (4) which externally surrounds the hub means (1) circumferentially at a distance;
- a support means (3) for supporting the flywheel ring (4) on the hub means; and with
- a vibration damping device (6, 8) with a tuned mass damper means (8) which, with respect to a rotation axis of the flywheel, is axially movable back and forth relative to the flywheel ring (4);
**characterized in that**:
- the tuned mass damper means (8) is fastened on the flywheel ring (4) and/or on the support means (3) by a fastening means (6);
- the fastening means (6) is designed in such a manner that it enables axial movability of the tuned mass damper means (8); and
- the tuned mass damper means has a plurality of tuned mass damper elements (8) which are held, distributed on a perimeter at a distance, by the fastening means (6).

2. The flywheel of claim 1, wherein
- the fastening means (6) has elastic ductility in at least one area; and wherein
- the axial movability of the tuned mass damper means (8) is achievable by the elastic ductility of the fastening means (6).

3. The flywheel according to one of the preceding claims, wherein
- the fastening means has two damping rings (6) arranged axially to one another in such a manner that the support means (3) is arranged at least partially in between; and wherein
- the two damping rings (6) are fastened to one another in such a manner that the support means (3) is, seen in the axial direction, arranged between the two damping rings (6).

4. The flywheel of claim 3, wherein
- the tuned mass damper elements (8) are held between the two damping rings (6) and are arranged distributed along the peripheral direction of the two damping rings (6); and wherein
- the two damping rings (6) have areas of higher elasticity and lower elasticity along their perimeter, wherein the tuned mass damper elements (8) are fastened in the areas with higher elasticity.

5. The flywheel according to one of the preceding claims, wherein the support means has a plurality of spokes (3) distributed on the perimeter, which extend radially between the hub means (1) and the flywheel ring (4).

6. The flywheel of claim 3 or of claim 3 and according to one of the preceding claims, wherein the tuned mass damper elements (8) are arranged in interspaces (3) between the spokes and held by the damping rings (6).

7. The flywheel according to one of the preceding claims, wherein
- a main resonance of the tuned mass damper means (8) is adjustable in such a manner that the main resonance essentially corresponds to the main resonance of the flywheel ring (4) or of the flywheel; and wherein
- the main resonance of the tuned mass damper means (8) is adjustable by balancing the weight of the tuned mass damper elements and of the elastic ductility of the fastening means (6).

8. The flywheel according to one of the preceding claims, wherein a centering means (10) is provided for centering the vibration damping device (6, 8) relative to the flywheel ring (4).

9. The flywheel of claim 3 or of claim 3 and according to one of the preceding claims, wherein the damping rings (6) are fastened to one another in such a manner that a relative movement between the damping rings (6) on the one hand and the support means (3) on the other hand is made possible.

10. The flywheel of claim 3 or of claim 3 and according to one of the preceding claims, wherein in the area of a respective contact surface of the damping rings (6) with the support means (3) a friction pad (14) is provided at least partially between the respective damping ring (6) and the corresponding area of the support means (3).

## Revendications

1. Volant d'inertie pour la stabilisation de position d'un engin spatial, avec
- un dispositif de moyeu (1) pour fixer le volant d'inertie ;
- un anneau d'inertie (4) qui entoure le dispositif de moyeu (1) sur la périphérie à l'extérieur, avec un écartement ;
- un dispositif de support (3) pour porter l'anneau d'inertie (4) sur le dispositif de moyeu (1) ; et avec
- un dispositif d'amortissement de vibrations (6, 8) avec un dispositif de masse d'amortissement (8) qui, par rapport à un axe de rotation du volant d'inertie, est apte à décrire un mouvement de va-et-vient axial par rapport à l'anneau d'inertie (4) ;
**caractérisé en ce que**
- le dispositif de masse d'amortissement (8) est fixé par un dispositif de fixation (6) à l'anneau d'inertie et/ou au dispositif de support (3) ;
- le dispositif de fixation (6) est formé de telle sorte qu'il permette la mobilité axiale du dispositif de masse d'amortissement (8) ; et **en ce que**
- le dispositif de masse d'amortissement (8) comporte plusieurs éléments de masse d'amortissement (8) qui sont tenus par le dispositif de fixation (6) en étant répartis sur la circonférence avec un écartement.

2. Volant d'inertie selon la revendication 1, dans lequel
- le dispositif de fixation (6) présente au moins dans une zone une déformabilité élastique ; et dans lequel
- la mobilité axiale du dispositif de masse d'amortissement (8) est apte à être obtenue par la déformabilité élastique du dispositif de fixation (6).

3. Volant d'inertie selon l'une des revendications précédentes, dans lequel
- le dispositif de fixation comporte deux anneaux d'amortissement (6) qui sont disposés axialement l'un par rapport à l'autre de telle sorte que le dispositif de support (3) soit disposé au moins partiellement entre eux ; et dans lequel
- les anneaux d'amortissement (6) sont fixés l'un à l'autre de telle sorte que le dispositif de support (3), vu dans la direction axiale, soit disposé entre les deux anneaux d'amortissement (6).

4. Volant d'inertie selon la revendication 3, dans lequel
- les éléments de masse d'amortissement (8) sont tenus entre les anneaux d'amortissement (6) et sont disposés en étant répartis le long de la direction circonférentielle des anneaux d'amortissement (6) ; et dans lequel
- les anneaux d'amortissement (6) présentent le long de leur circonférence des zones à élasticité plus élevée et à élasticité plus faible, les éléments de masse d'amortissement (8) étant fixés dans les zones à élasticité plus élevée ;

5. Volant d'inertie selon l'une des revendications précédentes, dans lequel le dispositif de support comporte, répartis sur la circonférence, plusieurs rayons (3) qui s'étendent radialement entre le dispositif de moyeu (1) et l'anneau d'inertie (4).

6. Volant d'inertie selon la revendication 3 ou selon la revendication 3 et l'une des revendications précédentes, dans lequel les éléments de masse d'amortissement (8) sont disposés dans des espaces intermédiaires entre les rayons (3) et sont tenus par les anneaux d'amortissement (6).

7. Volant d'inertie selon l'une des revendications précédentes, dans lequel
- une résonance principale du dispositif de masse d'amortissement (8) est réglable de telle sorte qu'elle corresponde sensiblement à la résonance principale de l'anneau d'inertie (4) ou du volant d'inertie ; et dans lequel
- la résonance principale du dispositif de masse d'amortissement (8) est réglable par ajustement du poids des éléments de masse d'amortissement et de la déformabilité élastique du dispositif de fixation (6).

8. Volant d'inertie selon l'une des revendications précédentes, dans lequel un dispositif de centrage (10) est prévu pour le centrage du dispositif d'amortissement de vibrations (6, 8) par rapport à l'anneau d'inertie (4).

9. Volant d'inertie selon la revendication 3 ou selon la revendication 3 et l'une des revendications précédentes, dans lequel les anneaux d'amortissement (6) sont fixés l'un à l'autre de manière à permettre le mouvement relatif entre les anneaux d'amortissement (6), d'une part, et le dispositif de support (3), d'autre part.

10. Volant d'inertie selon la revendication 3 ou selon la revendication 3 et l'une des revendications précédentes, dans lequel il est prévu dans la zone d'une surface de contact respective des anneaux d'amortissement (6) avec le dispositif de support (3) au moins partiellement une semelle de frottement (14) entre l'anneau d'amortissement (6) respectif et la zone correspondante du dispositif de support (3).
